# EUROPEAN PATENT APPLICATION

(11) **EP 0 890 835 A1**
(43) Date of publication of application: **13.01.1999**
(21) Application number: 97111658.7
(22) Date of filing: 09.07.1997
(51) Int. Cl.: G01N 31/22

(54) **Indicator and method for identifying that milk as sealably contained has become sour**

(71) Applicant: Franke, Michael, Dr., 85598 Baldham (DE)
(72) Inventor: van Eeden, Jan Hendrik, Rietfontein Pretoria 0084 (ZA); Ferreira, Stephanus Johannes, Gezina Pretoria 0084 (ZA)
(74) Representative: R.A. KUHNEN & P.A. WACKER

(57) **Abstract**

Disclosed are an indicator system and a method for detecting change in a product which would render it less fit for human consumption. In one embodiment, the indicator system (10) comprises a colour indicator (12,20), eg litmus, which changes colour when milk contained in ordinary sachet (18) becomes sour. The indicator is absorbed in a non-toxic base (14), eg filter paper, and is covered by a semi-permeable membrane (16,22). The membrane permits transfer of H⁺ or OH⁻ ions between the indicator and the milk. The indicator system (10) is secured to the wall of the sachet (18) so that it remains visible even when the sachet is subject to vigorous handling. In another embodiment, the system is formed as an integral part of the container. The sachet wall then serves as the base.

## Description

### BACKGROUND TO THE INVENTION

It is often not possible to establish whether products have become unfit for human use. This may even be the case where a product is already in use. Although the fact that a product has become unfit for use can often be detected when it is used, it is often at that stage too late to exchange such product when it is clear that it was already so unfit at its time of purchasing. Otherwise such exchange does not warrant the effort involved. Some types of sealed food or drink products in this respect come to mind. Although not only limited to such case, milk is an everyday product that immediately comes to mind. It is an object of this invention to alleviate this problem.

### FIELD OF THE INVENTION

This invention relates to a method of detecting a change in a product which would render it at least less fit for living being use and to monitoring such change. The invention also relates to an indicating facility for indicating a change in a product which renders it at least less fit for living being use and to a container which is integrally fitted with such indicating facility. Although not so limited, the methods, facility and container also find useful application when applied to conventionally containerised milk or milk product.

### BRIEF DESCRIPTION OF THE DRAWING

The invention is now described, by way of example, with reference to the accompanying drawings. In the drawings
Figure 1 diagrammatically shows an indicating facility in the form of an independent item for monitoring and indicating the condition of conventionally containerised milk, and
Figure 2 shows a container as integrally being fitted with an indicator.

### DETAILED DESCRIPTION OF THE DRAWINGS

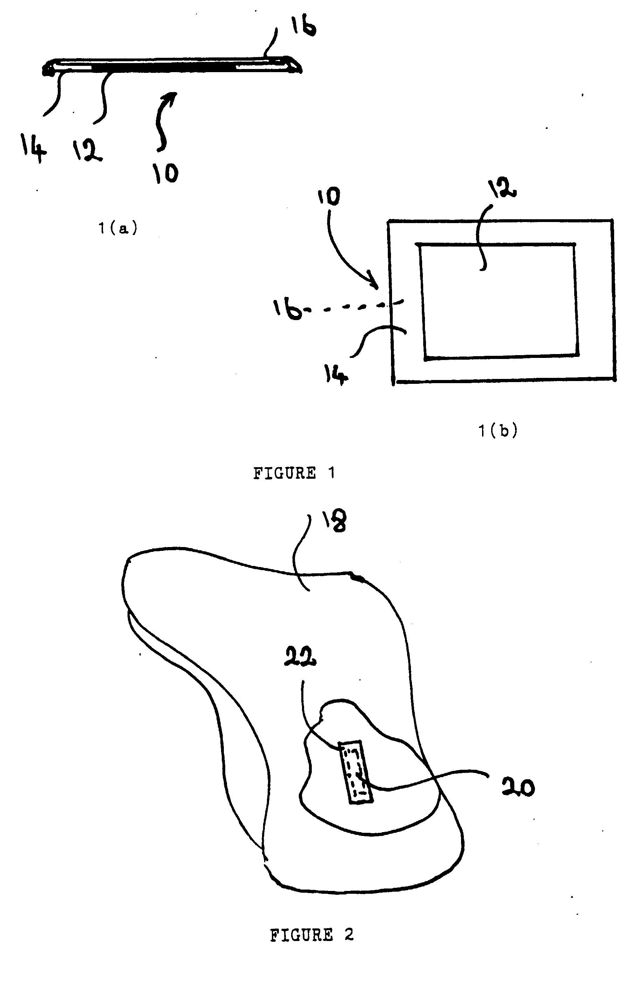

Referring to figures 1(a), showing an indicating facility in the form of an independent item 10 in side elevation and 1(b) showing it in plan view, it comprises an agent in the form of an indicator responding by way of colour change to milk as contained in an ordinary milk sachet, becoming sour, when immersed in such milk, which is in the form of an indicator in the form of litmus 12 serving as pH indicator which is absorbed in a non-toxic base as provided by filter paper 14. The litmus 12 as so absorbed is covered by a non-toxic semipermeable cover in the form of a dialysis membrane 16 permitting the transfer of hydrogen and hydroxy ions between the litmus 12 and the milk. The item 10 is preferably sealingly secured to the wall of a sachet to render it easily visually perceptible while retaining it so perceptible even if the sachet is subject to vigorous handling. The membrane 16 seals the filter paper 14 against the sachet.

It will be appreciated that litmus 12 as so maintained in contact with milk is only one of a multitude of possibilities to show that the milk has become sour. Other indicators responding by way of colour change to a change in pH are, for example, alizarin, and also in complex form, appropriate bromium complexes, para-nitrophenol, methylene blue, appropriate chlorine complexes or fluorescent indicators all of which are already known in the science. The indicator can even be in the form of a combination of various indicator substances or in combination with a non-colour changing substance serving as basis of comparison. It will be appreciated that some of the mentioned indicators are more effective than others while some, even though effective, may create a health problem if not properly semi-permeably sealed.

While the above substances are sensitive to pH, other characteristics which change when milk becomes sour can also be used to visually reflect such change. Redox, color or ultraviolet indicators, as relating to the oxidation of lactulose to milk acid, can thus also be used. Examples of redox indicators are methylene blue, lesitin and diphenyl nitro products.

It will be appreciated that any know indicator which is effective in reflecting the change, subject to the limitations of non-toxicity and endurance can be used.

By the same token, the indicator carrier depends on the type of indicator with the non-toxicity limitation and longevity being borne in mind. In the appropriate case the cover can be dispensed with.

While figure 1 shows the indicator as forming part of an independent item, it can, in fact, be integral with the wall of a sachet 18, as shown in figure 2. The sachet wall in this case serves as base for the indicator 20 which is covered by a cover such as a semi-permeable membrane 22, if required.

In the appropriate case the indicator can even be distributed in the milk by being dissolved or forming a colloidal suspension in it.

When operatively used, the indicator when forming part of the item 10, is pre-positioned with respect to a sachet by securing it to the latter's wall to maintain it easily visually perceptibly, or integrally formed as part of the sachet prior to filling it with milk.

The milk as contained in its sachet is monitored against its becoming sour thus detecting such souring when the appropriate colour change is detected. When milk is bought, an inspection of the indicator, in whichever way held, will immediately show up milk which is not fit for consumption any more. While benefiting the customer, the manufacturer and distributor also derive benefit owing to the former, by spot checking, ascertaining the quality of his product with the latter keeping a check on the quality of product delivered. In both cases a defect in equipment will also show up when a large number of sachets indicate a sour product.

Although the invention is described for monitoring milk and detecting a change, it will be appreciated that the invention is not limited to such use only. Any suitable product can be so monitored and/or a change in its characteristics which would render it less fit for human use observed.

Thus the invention discloses a method of monitoring a product to detect a change in it which renders it at least less fit for living being use which comprises
causing an agent which has a characteristic appropriate to sensorially detect such change and which corresponds with the product so monitored to be in a non-health affecting fashion maintained in contact with the product, if not in the appropriate case causing it to extend throughout at least part of the product.

The invention further describes a method in which the agent, as caused to be maintained in contact with the product, is in the form of an indicator which is of a kind in which the change resulting from a change in the product is visually detectable and in which the indicator, as caused to be maintained in contact with the product, is suitable for monitoring a consumable type of product, a change in the indicator thus showing that the product has become unfit for consumption.

Furthermore, a method is described in which the indicator, as caused to be maintained in contact with the product, is suitable for monitoring a consumable type of product for becoming sour with the product thus being of a kind when becoming sour resulting in its becoming unfit for human consumption and in which the indicator, as caused to be maintained in contact with the product, is suitable for monitoring a liquid kind of consumable type product as appropriately contained and in which the indicator, as caused to be maintained in contact with the product, monitors the change by way a characteristic in the form of colour.

Additionally, the invention describes a method in which the indicator, as caused to be maintained in contact with the product, forms part of an indicating facility comprising the indicator as carried by a non-toxic base which is, in the appropriate case, suitably covered by a nontoxic semi-permeable cover which only permits the passage of colour affecting entity from the product to the indicator, the indicating facility, when in the form of an independent item, being suitably prepositioned with respect to this product to cause it to remain visually perceptible even if the product is subject to vigorous handling, and in which the indicator, as caused to be maintained in contact with the product, is carried by a base provided by an independent base substance rendering the indicating facility to be in the form of an independent item.

A method is also disclosed in which the indicator, as caused to be maintained in contact with the product, is carried by a base provided by the wall of the container with which the indicator is so suitably associated to enable it to remain in interactive contact with the product, and in which the indicator, is caused to be maintained in contact with a product in the form of milk thus monitoring it for becoming sour and in which the indicator, as caused to be maintained in contact with the milk, monitors it for a change in at least one of the pH, the lactulose milk acid transfer and the casein content.

The invention further descibes a method in which the indicator, as caused to be maintained in contact with the milk, is carried by a suitable base which is covered by a semipermeable membrane enabling the transfer of appropriate entity from the milk to the indicator while blocking the movement of indicator to the milk and in which the indicator, as caused to be maintained in contact with the milk product, is in the form of litmus thus responding to a change in pH.

Thus, the invention describes a method of detecting a change in a product and monitoring a product to detect a change in it which would render it at least less fit for living being use substantially as described.

## Claims

1. A method of detecting a change in a product which would render it at least less fit for living being use which comprises
appropriately sensorially detecting a change, which corresponds with the product so becoming less fit for use, in a characteristic of an agent which is in a non-health affecting fashion maintained in contact with the product, if not extending non-health and product affecting throughout at least part of the product.

2. A method as claimed in claim 1 in which the change is visually detected with the agent being in the form of a suitable indicator causing the change to be so visually perceptible,
preferably visually detecting the change of the appropriate indicator as in contact with a consumable type of product with the indicator thus appropriately maintained in contact with such product and with the change indicating that the product has become unfit for use by way of consumption.

3. A method as claimed in claim 1 or 2 in which the change as detected indicates that the consumable type of product has become sour, the product thus being of a kind in which its becoming sour results in its becoming unfit for human consumption,
preferably visually detecting the change of the appropriate indicator as in contact with a consumable type of product as suitably contained, and
in which the change as visually detected is preferably detected in a liquid form consumable type of product as appropriately contained and
in which the change as visually detected is preferably by way of change in the characteristic in the form of colour.

4. A method as claimed in one of the preceding claims 1 to 3 in which the change is visually detected by means of an indicating facility comprising an indicator as carried by a non-toxic base with the indicator, in the appropriate case, being suitably covered by a non-toxic semi-permeable cover which only permits the passage of colour affecting entity from the product to the indicator, the indicating facility when in the form of an independent item being suitably prepositioned with respect to the consumable type of product to cause it to remain visually perceptible even if the product as so contained is subject to vigorous handling, and
in which the indicator is preferably carried by a substance providing an independent base rendering the indicating facility being in the form of an independent item.

5. A method as claimed in one of the preceding claims 1 to 4 in which the indicator is carried by a base as provided by the wall of the container with which the indicator is thus suitably associated to enable it to remain in interactive contact with the consumable type of product, and
in which the change as detected is preferably detected in milk becoming sour, preferably by way of an indicator responding to a change in at least one of the pH, the lactulose milk acid transfer and the casein content.

6. A method as claimed in one of the preceding claims 1 to 5 in which the change as detected is detected by way of an indicator which is carried by a suitable base which is covered by a cover in the form of a semi-permeable membrane enabling the transfer of appropriate entity from the milk to the indicator while blocking the movement of indicator to the milk, and
in which the change is preferably detected by way of an indicator in the form of litmus thus responding to a change in pH.

7. An indicating facility for indicating a change in a product which renders it at least less fit for living being use which comprises
a suitable agent as carried by a non-toxic base and having a characteristic of which a change indicates that it has become less fit for use once in a non-health affecting fashion maintained in contact with such product, the agent in the appropriate case being suitably covered by a non-toxic semi-permeable cover which only permits the passage of agent characteristic changing entity from such product to the agent, once in use, the indicating facility, when in the form of an independent item, being suitably locatable with respect to such product to maintain it sensorially perceptible.

8. An indicating facility as claimed in claim 7 in which the agent is in the form of a suitable indicator which shows a visually perceptible change, once operatively used,
in which the indicator is preferably of a kind in which the change in characteristic is by way of a change of colour, and
which is preferably in the form of an independent item with the indicator being carried by a suitably base by being applied to an independent base substance.

9. An indicating facility as claimed in claim 7 or 8 which forms part of the wall of a container used for containing product of which a change is desired to be detected by in such a way being associated at an appropriate position with the wall, which thus serves as base, to enable it to remain in interactive contact with such product once so contained, and
in which the indicator is preferably of a kind showing that a consumable type of product with which it is in contact, once the facility is operatively used, has become less fit for human consumption because of becoming sour.

10. An indicating facility as claimed in one of the preceding claims 7 to 9 in which the indicator is of a suitable kind to result in its change to be reactive to a change in at least one of the pH, the lactulose milk acid transfer and the casein content with the facility thus being used for indicating the souring of product in the form of milk, as conventionally contained,
in which the indicator is preferably in the form of litmus thus responding to a change in pH, and
in which the indicator is preferably covered by a semi-permeable membrane enabling the transfer of appropriate entity from the milk to the indicator while blocking the movement of indicator to the milk once the facility is operatively used.

11. A container which is integrally fitted with an indicating facility as claimed in any one of claims 7 to 10.
